# FASCICULE DE BREVET EUROPEEN

(11) **EP 2 347 209 B1**
(45) Date de publication et mention de la délivrance du brevet: **10.01.2018**
(21) Numéro de dépôt: 09740108.7
(22) Date de dépôt: 19.10.2009
(51) Int. Cl.: F28D 20/02, B60H 1/00, B60H 1/32

(54) **ECHANGEUR DE CHALEUR APTE À REFROIDIR UN FLUIDE RÉFRIGÉRANT QUI CIRCULE À L'INTÉRIEUR DUDIT ÉCHANGEUR ET COMPORTANT AU MOINS UN MATÉRIAU À CHANGEMENT DE PHASE**
WÄRMETAUSCHER ZURKÜHLUNG EINES MEDIUMS MIT PHASENWECHSELMATERIAL
HEAT EXCHANGER ABLE TO COOL A REFRIGERANT FLOWING INSIDE SAID EXCHANGER AND COMPRISING AT LEAST ONE PHASE-CHANGE MATERIAL

(30) Priorité: 23.10.2008 FR 0805889
(43) Date de publication de la demande: 27.07.2011
(73) Titulaire: Valeo Systèmes Thermiques, 78321 Le Mesnil Saint Denis (FR)
(72) Inventeur: BARAT, Didier, F-78690 Les Essarts Le Roi (FR); NEVEU, Daniel, F-91300 Massy (FR); YAHIA, Mohamed, F-75005 Paris (FR)
(74) Mandataire: Metz, Gaëlle
(86) Numéro de dépôt international: PCT/EP2009/063689
(87) Numéro de publication internationale: WO 2010/046349

(56) Documents cités:
- DE-A1-102006 011 327
- US-A1- 2004 093 889

## Description

### Domaine technique de l'invention.

La présente invention est du domaine des installations de ventilation, de chauffage et/ou de climatisation, notamment d'un véhicule automobile. Elle a pour objet un échangeur de chaleur apte à refroidir un fluide réfrigérant qui circule à l'intérieur dudit échangeur, ce dernier étant constitutif d'une boucle de climatisation participante d'une telle installation. Elle a aussi pour objet un ensemble de refroidissement comprenant un tel échangeur de chaleur. Elle a enfin pour objet un procédé de mise en oeuvre d'un registre de volets constitutifs d'un tel ensemble.

### Etat de la technique.

Un véhicule automobile est couramment équipé d'une installation de ventilation, de chauffage et/ou de climatisation pour modifier les paramètres aérothermiques de l'air contenu à l'intérieur de l'habitacle du véhicule. Une telle modification est obtenue à partir de la délivrance à l'intérieur de l'habitacle d'un flux d'air principal. Une installation à cet effet est connue du document US 2004/0093889A1. De ce document sont connus un condenseur classique (216) correspondant au préambule de la revendication 1 ainsi qu'un groupe évaporateur (222, 232) muni d'un réservoir permettant le stockage de froid. Pour refroidir le flux d'air principal, l'installation comporte une boucle de climatisation à l'intérieur de laquelle circule un fluide réfrigérant, tel qu'un fluide sous-critique, R134a ou analogue, ou tel qu'un fluide supercritique, dioxyde de carbone référencé R744 ou analogue. La boucle de climatisation comprend au moins un compresseur pour faire circuler le fluide réfrigérant à l'intérieur de ladite boucle, un échangeur de chaleur apte à refroidir le fluide réfrigérant en cédant de la chaleur à un flux d'air extérieur le traversant, un organe de détente et un évaporateur destiné à refroidir le flux d'air principal.

Dans le cas où le fluide réfrigérant est sous-critique, l'échangeur de chaleur est un condenseur interposé sur la boucle de climatisation entre le compresseur et l'organe de détente selon un sens d'écoulement du fluide réfrigérant à l'intérieur de ladite boucle.

Dans le cas où le fluide réfrigérant est supercritique, l'échangeur de chaleur est un refroidisseur de gaz interposé sur la boucle de climatisation entre le compresseur et un échangeur de chaleur interne qui est disposé en amont de l'organe de détente, selon le sens d'écoulement du fluide réfrigérant à l'intérieur de ladite boucle.

Le fluide réfrigérant subit à l'intérieur de la boucle de climatisation un cycle thermodynamique couramment décrit dans un diagramme de Mollier. Il est connu de déduire de ce diagramme un coefficient de performance de ladite boucle, désigné par l'acronyme anglais « COP » et défini comme étant le rapport entre une puissance utile récupérée par l'évaporateur et une énergie consommée par le compresseur pour comprimer le fluide réfrigérant. Il est constamment recherché que le coefficient de performance soit le plus élevé possible, par exemple de l'ordre de 2 à 4, pour procurer à un utilisateur du véhicule un confort thermique optimisé, pour une énergie consommée minimale.

Un problème général posé dans le domaine réside dans le fait qu'il est difficile d'obtenir un coefficient de performance élevé dans certaines conditions d'utilisation du véhicule, notamment lorsque ce dernier subit des phases répétées et successives de marche-arrêt, par exemple dues à des embouteillages. Cette difficulté est de surcroit amplifiée lorsque le véhicule est utilisé dans des conditions climatiques chaudes, dans lesquelles la température du flux d'air extérieur traversant l'échangeur de chaleur est fréquemment supérieure à 35°C et est susceptible d'atteindre 55°C en partie à cause des calories émises par le moteur à combustion interne du véhicule. Un tel flux d'air extérieur tend à réchauffer de manière conséquente le fluide réfrigérant présent à l'intérieur de l'échangeur de chaleur. Or, il est connu que la valeur du coefficient de performance de ladite boucle est fortement dépendante d'une température de sortie du fluide réfrigérant prise en sortie de l'échangeur de chaleur, dans le sens où plus ladite température de sortie est faible, plus on évite une augmentation de la haute pression dans la boucle de climatisation en sortie du condenseur ou refroidisseur de gaz, plus le coefficient de performance est élevé.

Il en découle que le compresseur tend à être fortement sollicité pour procurer un confort thermique optimisé à l'utilisateur du véhicule. Une telle sollicitation est consommatrice d'énergie, ce qu'il est préférable d'éviter.

Il en ressort qu'un problème spécifique dans le domaine réside dans la recherche d'un échangeur de chaleur qui permette l'obtention de ladite température de sortie du fluide réfrigérant qui soit la plus basse possible, pour offrir un coefficient de performance le plus élevé possible, tout en minimisant une consommation énergétique du compresseur pendant les phases d'arrêts répétitifs et quand la température extérieure dépasse 35°C, dans le but ultime d'assurer un confort thermique optimisé à l'utilisateur du véhicule.

### Objet de l'invention.

Le but de la présente invention est de proposer un échangeur de chaleur constitutif d'une boucle de climatisation d'une installation de ventilation, de chauffage et/ou de climatisation, ledit échangeur de chaleur étant apte à refroidir un fluide réfrigérant circulant à l'intérieur dudit échangeur en cédant de la chaleur à un flux d'air extérieur qui ce dernier, ledit échangeur étant peu encombrant et étant agencé pour permettre l'obtention d'un coefficient de performance « COP » de la boucle de climatisation qui est le plus élevé possible, notamment compris entre 2 et 4, y compris lors d'utilisation de la boucle de climatisation dans des conditions de températures chaudes, par exemple lorsque qu'une température d'entrée Te du flux d'air extérieur prise en amont dudit échangeur est supérieure à 35°C, y compris lors de phases successives et répétées d'avancement et d'arrêt du véhicule, par exemple dues à des embouteillages ou analogue, de telle sorte que la puissance consommée par un compresseur constitutif de ladite boucle soit minimisée, tout en assurant un confort thermique optimisé à un utilisateur du véhicule.

Plus particulièrement, le but de la présente invention est de proposer un tel échangeur de chaleur qui permette l'obtention d'une température de sortie Ts du fluide réfrigérant en sortie dudit échangeur qui soit la plus basse possible.

Un autre but de la présente invention est de proposer un ensemble de refroidissement comprenant un tel échangeur de chaleur, un tel ensemble étant peu encombrant, efficace et aisé à installer en combinaison avec ladite boucle. Cet ensemble sera disposé en face avant du véhicule et prend en compte l'augmentation de la température de l'air extérieur consécutive aux phases répétitives d'arrêts.

Un dernier but de la présente invention est de proposer un procédé de mise en oeuvre d'un registre de volets de distribution d'air participant dudit ensemble qui permet une utilisation optimisée d'un tel échangeur.

L'échangeur de chaleur de la présente invention est un échangeur de chaleur destiné à refroidir un fluide réfrigérant qui circule à l'intérieur du dit échangeur.

Selon la présente invention, ledit échangeur comporte au moins un matériau à changement de phase apte à refroidir le fluide réfrigérant lorsqu'une température T du fluide réfrigérant à l'intérieur de l'échangeur de chaleur est supérieure à une température seuil Tf dudit matériau.

Il en découle qu'un tel échangeur de chaleur comporte une réserve de frigories stockées par le matériau à changement de phase que ce dernier emmagasine ou restitue, selon les conditions d'utilisation dudit échangeur, et notamment selon la valeur de la température T du fluide réfrigérant à l'intérieur dudit échangeur.

Lorsque la température du fluide réfrigérant à l'intérieur dudit échangeur est supérieure à la température seuil Tf du matériau à changement de phase, ce dernier fond. La réaction de fusion étant endothermique, le matériau à changement de phase refroidit le fluide réfrigérant, de telle sorte que la température de sortie Ts du fluide réfrigérant prise en sortie de l'échangeur de chaleur est maintenue la plus basse possible. Il en résulte qu'un coefficient de performance « COP » de ladite boucle demeure élevé, notamment compris entre 2 et 4, ce qui permet de procurer un confort thermique optimisé à un utilisateur du véhicule, sans avoir à mettre en marche de manière excessive un compresseur constitutif d'une boucle de climatisation comprenant ledit échangeur.

Ledit échangeur comporte avantageusement une première zone en relation avec une entrée de fluide réfrigérant à l'intérieur dudit échangeur et une deuxième zone en relation avec une sortie de fluide réfrigérant hors dudit échangeur, ladite deuxième zone étant munie du matériau à changement de phase.

Ladite première zone constitue avantageusement une première zone d'échange thermique entre un flux d'air extérieur traversant ledit échangeur et le fluide réfrigérant.

Ladite deuxième zone constitue avantageusement une deuxième zone d'échange thermique entre d'une part le fluide réfrigérant et le matériau à changement de phase, et d'autre part entre ce dernier et le flux d'air extérieur.

Ladite deuxième zone comprend préférentiellement au moins un premier tube à l'intérieur duquel circule le fluide réfrigérant, le matériau à changement de phase étant retenu dans le volume défini entre le premier tube et un second tube placé à l'extérieur du premier tube, le flux d'air extérieur circulant autour dudit second tube.

De préférence, le tube est équipé d'ailettes internes pour favoriser un échange thermique interne entre le matériau à changement de phase et le fluide réfrigérant.

De préférence encore, le tube est équipé d'ailettes externes pour favoriser un échange thermique externe entre le matériau à changement de phase et le flux d'air extérieur.

Une surface frontale de la deuxième zone S2 est avantageusement comprise entre 0,1 et 0,5 fois une surface frontale de la première zone S1. Ces valeurs représentent le bon compromis entre les surfaces frontales des deux zones pour que la première zone assure une refroidissement convenable du fluide réfrigérant en phase normal de fonctionnement et que la deuxième zone maintienne une niveau de confort satisfaisant pendant les phases répétitives d'arrêts.

L'échangeur de chaleur est par exemple un condenseur, le fluide réfrigérant étant un fluide sous-critique.

L'échangeur de chaleur est par exemple encore un refroidisseur de gaz, le fluide réfrigérant étant un fluide supercritique.

Une boucle de climatisation de la présente invention, qui est constitutive d'une installation de ventilation, de chauffage et/ou de climatisation d'un véhicule automobile, est principalement reconnaissable en ce que la boucle de climatisation comporte un tel échangeur de chaleur.

Un ensemble de refroidissement de la présente invention est principalement reconnaissable en ce que ledit ensemble comprend un tel échangeur de chaleur et des moyens d'obturation d'un passage du flux d'air extérieur à travers ledit échangeur.

Lesdits moyens d'obturation sont avantageusement constitués d'un registre de volets de distribution d'air.

L'ensemble de refroidissement comprend de préférence un groupe moto-ventilateur qui est indifféremment disposé en amont ou en aval desdits moyens d'obturation selon un sens d'écoulement du flux d'air extérieur à travers ledit échangeur.

Un procédé de mise en oeuvre d'un tel registre de volets, est principalement reconnaissable en ce que ledit procédé comprend :
- une première étape consistant à mesurer une température d'entrée Te du flux d'air extérieur prise en amont dudit échangeur et à la comparer avec une température de consigne Tc, puis
- une deuxième étape qui consiste à :
   *) disposer lesdits volets en une position de fermeture dans laquelle ces derniers interdisent un passage du flux d'air extérieur à travers ledit échangeur, si la température mesurée du flux d'air extérieur est supérieure à la température de consigne Tc, ou
   *) disposer lesdits volets en une position d'ouverture dans laquelle ces derniers autorisent le passage du flux d'air extérieur à travers ledit échangeur, si la température mesurée du flux d'air extérieur est inférieure ou égale à la température de consigne Tc.

Ledit procédé comprend accessoirement une troisième étape qui succède à ladite première étape et qui consiste à :
- arrêter le groupe moto-ventilateur, si la température mesurée du flux d'air extérieur est supérieure à la température de consigne Tc, ou
- mettre en marche le groupe moto-ventilateur, si la température mesurée du flux d'air extérieur est inférieure ou égale à la température de consigne Tc.

### Description des figures.

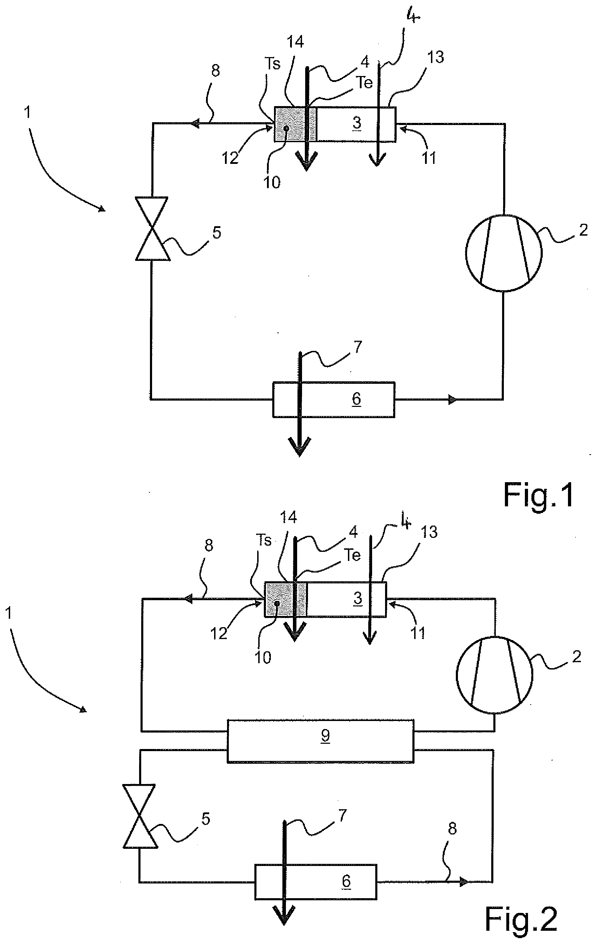

La présente invention sera mieux comprise, et des détails en relevant apparaîtront, à la lecture de la description qui va être faite de variantes de réalisation en relation avec les figures des planches annexées, dans lesquelles : La fig.1 est une illustration schématique d'une boucle de climatisation de la présente invention à l'intérieur de laquelle circule un fluide réfrigérant sous-critique.

La fig.2 est une illustration schématique d'une boucle de climatisation de la présente invention à l'intérieur de laquelle circule un fluide réfrigérant supercritique.

La fig.3 est une vue schématique en coupe transversale d'un conduit constitutif d'un échangeur de chaleur participant de la boucle de climatisation illustrée sur les figures précédentes.

La fig.4 est une vue schématique en coupe longitudinale d'un ensemble de refroidissement comprenant l'échangeur de chaleur partiellement illustré sur la fig.3.

Un véhicule automobile est équipé d'une installation de ventilation, de chauffage et/ou de climatisation pour modifier les paramètres aérauliques de l'air contenu à l'intérieur de l'habitacle du véhicule. Sur les fig.1 et fig.2, l'installation comprend une boucle de climatisation 1 à l'intérieur de laquelle circule un fluide réfrigérant. La boucle de climatisation 1 comporte un compresseur 2 pour comprimer le fluide réfrigérant, un échangeur de chaleur 3 destiné à refroidir le fluide réfrigérant en cédant de la chaleur à un flux d'air extérieur 4 traversant ledit échangeur 3, un organe de détente 5 à l'intérieur duquel le fluide réfrigérant subit une détente et un évaporateur 6 apte à refroidir un flux d'air principal 7 le traversant préalablement à la délivrance de ce dernier 7 à l'intérieur de l'habitacle du véhicule.

Le fluide réfrigérant est par exemple un fluide sous-critique, tel que le R134a ou analogue. Dans ce cas, l'échangeur de chaleur 3 est un condenseur qui est interposé sur la boucle de climatisation 1 représentée sur la fig.1 entre le compresseur 2 et l'organe de détente 5 selon un sens de circulation 8 du fluide réfrigérant à l'intérieur de ladite boucle 1.

Le fluide réfrigérant est par exemple encore un fluide supercritique, tel que le dioxyde de carbone (R744) ou analogue. Dans ce cas, l'échangeur de chaleur 3 est un refroidisseur de gaz interposé sur la boucle de climatisation 1 représentée sur la fig.2 entre le compresseur 2 et un échangeur de chaleur interne 9 qui est disposé en amont de l'organe de détente 5, selon le sens de circulation 8 du fluide réfrigérant à l'intérieur de ladite boucle 1.

Pour que l'échangeur de chaleur 3 permette une obtention d'une température de sortie Ts du fluide réfrigérant en sortie dudit échangeur 3 qui soit la plus basse possible, en vue d'offrir un coefficient de performance « COP » de ladite boucle 1 qui soit le plus élevé possible, tout en minimisant une consommation énergétique du compresseur 2, et en assurant un confort thermique optimisé à un utilisateur du véhicule, il est proposé par la présente invention que l'échangeur de chaleur 3 soit pourvu d'au moins un matériau à changement de phase 10, tel que de la paraffine ou analogue. Ce matériau à changement de phase 10 est apte à refroidir le fluide réfrigérant lorsqu'une température T du fluide réfrigérant à l'intérieur dudit échangeur de chaleur 3 excède une température seuil Tf dudit matériau 10.

Ces dispositions sont telles que l'échangeur de chaleur 3 est apte à stocker des frigories, notamment lorsque le véhicule est en mode roulage, et est à même de restituer les frigories stockées, notamment lorsque le véhicule subit des phases répétées et successives de marche-arrêt, par exemple dans des embouteillages. Ces dispositions visent à éviter un échauffement du fluide réfrigérant présent à l'intérieur de l'échangeur de chaleur 3. Ces dispositions trouvent notamment leur avantage lorsque le flux d'air extérieur 4 traversant ledit échangeur 3 n'est plus à même de refroidir suffisament le fluide réfrigérant, en raison d'une température excessive du flux d'air extérieur 4.

L'échangeur de chaleur 3 comporte une entrée 11 de fluide réfrigérant et une sortie 12 de fluide réfrigérant. Ladite entrée 11 est en relation avec une première zone 13 dudit échangeur 3 tandis que la dite sortie 12 est en relation avec une deuxième zone 14 dudit échangeur 3. La première zone 13 est en communication avec la deuxième zone 14, de telle sorte que le fluide réfrigérant puisse circuler de la première zone 13 vers la deuxième zone 14.

La première zone 13 est par exemple constituée d'un échangeur de chaleur traditionnel, tel qu'à tubes plats.

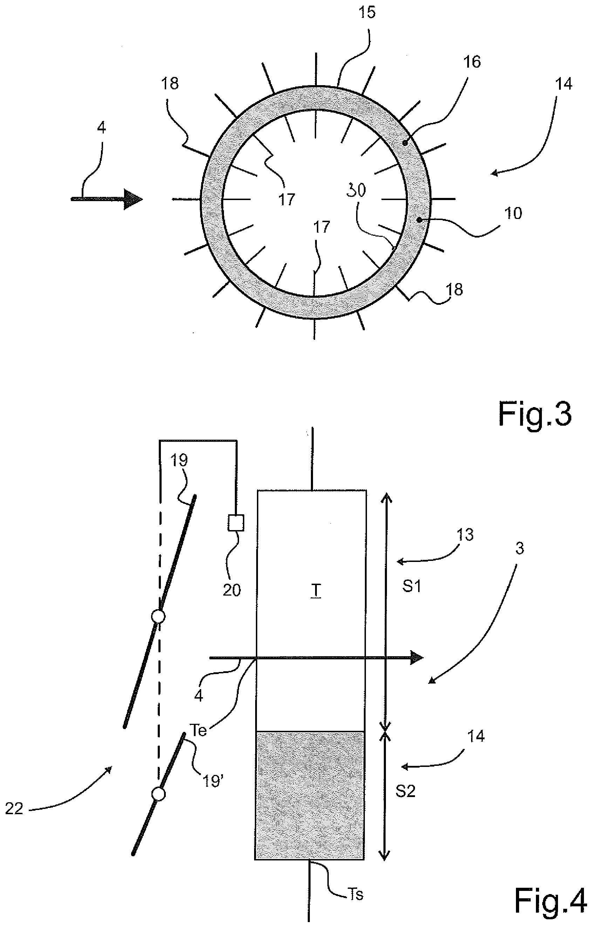

Sur la fig.3, la deuxième zone 14 comprend un premier tube 30 à l'intérieur duquel circule le fluide réfrigérant, le matériau à changement de phase 10 étant retenu dans le volume 16 défini entre le premier tube 30 et un second tube 15 placé à l'extérieur du premier tube 30, entourant ce dernier et étant co-axial à ce dernier. Le flux d'air extérieur circule autour du second tube 15 et lèche les parois de ce tube de sorte à refroidir le matériau à changement de phase pour que ce dernier se charge en frigories pendant les phases normales de roulage.

Pendant les phases répétitives d'arrêt comme les embouteillages, le fluide réfrigérant circule à l'intérieur du premier tube 30 tandis que le matériau à changement de phase 10 restitue les frigories, accumulées précédemment, au fluide réfrigérant. Il est prévu à la variante de la figure 4 de limiter l'échange entre le flux d'air extérieur et la paroi du second tube 15 quand la température de ce flux d'air devient trop élevé.

Il en ressort que la première zone 13 constitue une première zone d'échange thermique entre le flux d'air extérieur 4 et le fluide réfrigérant. Il en ressort également que la deuxième zone 14 constitue une deuxième zone d'échange thermique entre d'une part le fluide réfrigérant et le matériau à changement de phase 10, et d'autre part entre ce matériau à changement de phase 10 et le flux d'air extérieur 4.

Pour favoriser un premier échange thermique entre le matériau à changement de phase 10 et le fluide réfrigérant, le premier tube 30 est pourvu d'une pluralité d'ailettes internes 17 ménagées radialement audit tube 30. De même, pour favoriser un deuxième échange thermique entre le matériau à changement de phase 10 et le flux d'air extérieur 4, le second tube 15 est pourvu d'une pluralité d'ailettes externes 18 ménagées radialement audit tube 15.

Sur la fig.4, la deuxième zone 14 présente une surface frontale S2 traversée orthogonalement par le flux d'air extérieur 4, qui est comprise entre 0,1 et 0,5 fois une surface frontale de la première zone S1, également prise orthogonalement au flux d'air extérieur 4.

Lorsque la température T du fluide réfrigérant à l'intérieur dudit échangeur 3 excède la température seuil Tf du matériau à changement de phase 10, ce dernier fond. La fusion dudit matériau à changement de phase 10 refroidit le fluide réfrigérant, ce qui permet un maintien de ladite température de sortie Ts du fluide réfrigérant à une valeur n'excédant ladite température seuil Tf que de quelques degrés, pendant une période de temps de l'ordre de quelques minutes. Ces dispositions permettent un maintien du confort thermique à l'intérieur de l'habitacle du véhicule, sans avoir recours à une consommation énergétique supplémentaire du compresseur 2, y compris dans des conditions climatiques chaudes consécutives à des phases répétitives de marches-arrêts, telles que des conditions où une température d'entrée Te du flux d'air extérieur 4 prise en amont dudit échangeur 3, selon un sens d'écoulement du flux d'air extérieur 4 à travers l'échangeur 3, est supérieure à 35°C.

L'échangeur de chaleur 3 est équipé d'un registre de volets d'air 19, 19' qui est manoeuvrable entre une position d'ouverture dans laquelle lesdits volets 19, 19' autorisent un passage du flux d'air 4 à travers l'échangeur de chaleur 3 et une position de fermeture dans laquelle lesdits volets 19, 19' interdisent un tel passage. Des positions intermédiaires de ces volets sont bien entendu envisageables pour gérer plus finement la quantité d'air qui circule dans la premiere zone 13 et/ou de la deuxième zone 14. L'échangeur de chaleur 3 et le registre desdits volets 19, 19' forment conjointement un ensemble de refroidissement 22 du fluide réfrigérant.

Lorsque le capteur de température 20, disposé en amont de l'échangeur de chaleur 3 selon le sens d'écoulement du flux d'air extérieur 4 à travers ce dernier, détecte une température Te du flux d'air 4 qui dépasse la température seuil du matériau à changement de phase 10, le deuxième volet 19' localisé devant la deuxième zone 14 où est installé le matériau à changement de phase est placé en position de fermeture, interdisant à l'air d'accéder à la deuxième zone 14. On évite que les frigories accumulées dans le matériau à changement de phase soient dispersées dans l'air et on concentre ainsi l'énergie disponible pour échanger avec le fluide réfrigérant.

Le premier volet 19 localisé devant la première zone 13 est maintenu ouvert, c'est-à-dire autorisant le passage de l'air au sein de la première zone 13 tant que la température du flux d'air extérieur 4 ne dépasse pas un certain seuil. L'effet dynamique de l'air sur la première zone 13 permet d'assurer un refroidissement suffisant.

Quand ce seuil est dépassé, le premier volet 19 est fermé pour limiter l'échauffement parasite et ne pas annihiler la réduction de température apportée par le matériau à changement de phase 10 dans la deuxième zone 14. Ceci limite la dégradation trop importante du coefficient de performance de la boucle de climatisation.

Quand le détecteur de température 20 mesure une température Te du flux d'air extérieur qui est inférieure à la température seuil du matériau à changement de phase, le premier volet 19 et le deuxième volet 19' sont placés en position ouverture pour autoriser le passage du flux d'air 4 au travers de la première zone 13 et de la deuxième zone 14. Ces dispositions visent à permettre une solidification du matériau à changement de phase 10 en vue de stocker les frigories lorsque la température mesurée est inférieure à la température seuil du matériau

Dans le cas où le matériau à changement de phase présente une température seuil Tf de l'ordre de 45°C, l'ensemble de ces dispositions est tel qu'en phase de roulage du véhicule, durant laquelle la température d'entrée Te du flux d'air est par exemple de l'ordre de 40°C, le fluide réfrigérant, qui pénètre à l'intérieur dudit échangeur 3 à une température supérieure à 80°C, est évacué hors de la première zone 13 à une température de l'ordre de 42°C, pour être finalement évacué hors de la deuxième zone 14 à une température de l'ordre de 44°C.

Dans ce même cas, l'ensemble de ces dispositions est tel qu'en phase d'arrêt du véhicule, durant laquelle ladite température d'entrée Te est par exemple de l'ordre de 55°C, le fluide réfrigérant, qui pénètre à l'intérieur dudit échangeur 3 à une température supérieure à 80°C, est évacué hors de la première zone 13 à une température de l'ordre de 57°C, pour être finalement évacué hors de la deuxième zone 14 à une température de l'ordre de 47°C grâce à l'apport en frigories en provenance du matériau à changement de phase 10. On comprend donc qu'en l'absence de ce matériau à changement de phase, le fluide réfrigérant sort du condenseur/refroidisseur de gaz à une température plus élevée (ici 57°C au lieu de 47°C) ce qui induit une surconsommation de la part du compresseur pour maintenir le niveau de confort souhaité par les utilisateurs du véhicule.

Le matériau à changement de phase 10 est choisi en fonction de sa température seuil Tf qui permet à la deuxième zone 14 de se comporter comme une zone dite tampon susceptible de capter des frigories dans certains cas et de les restituer dans d'autres. Selon les conditions climatiques et les plages d'optimisation visées de consommation énergétique, la température seuil Tf du matériau à changement de phase est choisie typiquement de l'ordre de 25°C à 50°C. Une sélection avantageuse s'opère entre 25°C et 35°C car le coefficient de performance de la boucle de climatisation se dégrade de manière notable quand la température du fluide réfrigérant en sortie du refroidisseur de gaz/condenseur 3 dépasse ces températures, ce qui se traduit par une puissance consommée par le compresseur 2 anormalement importante.

## Revendications

1. Condenseur ou refroidisseur de gaz (3) destiné à refroidir un fluide réfrigérant qui circule à l'intérieur dudit condenseur ou refroidisseur de gaz (3), **caractérisé en ce que** ledit condenseur ou refroidisseur de gaz (3) comporte au moins un matériau à changement de phase (10) apte à refroidir le fluide réfrigérant lorsqu'une température T du fluide réfrigérant à l'intérieur du condenseur ou refroidisseur de gaz (3) est supérieure à une température seuil Tf dudit matériau (10).

2. Condenseur ou refroidisseur de gaz (3) selon la revendication précédente, **caractérisé en ce que** ledit condenseur ou refroidisseur de gaz (3) comporte une première zone (13) en relation avec une entrée (11) de fluide réfrigérant à l'intérieur dudit condenseur ou refroidisseur de gaz (3) et une deuxième zone (14) en relation avec une sortie (12) de fluide réfrigérant hors dudit condenseur ou refroidisseur de gaz (3), ladite deuxième zone (14) étant munie du matériau à changement de phase (10).

3. Condenseur ou refroidisseur de gaz (3) selon la revendication 2, **caractérisé en ce que** ladite première zone (13) constitue une première zone d'échange thermique entre un flux d'air extérieur (4) traversant ledit condenseur ou refroidisseur de gaz (3) et le fluide réfrigérant.

4. Condenseur ou refroidisseur de gaz (3) selon l'une quelconque des revendications 2 et 3, **caractérisé en ce que** ladite deuxième zone (14) constitue une deuxième zone d'échange thermique entre d'une part le fluide réfrigérant et le matériau à changement de phase (10), et d'autre part entre ce dernier (10) et le flux d'air extérieur (4).

5. Condenseur ou refroidisseur de gaz (3) selon l'une quelconque des revendications 2 à 4, **caractérisé en ce que** ladite deuxième zone (14) comprend au moins un premier tube (30) à l'intérieur duquel circule le fluide réfrigérant, le matériau à changement de phase (10) étant maintenu dans un volume (16) délimité par le premier tube (30) et une deuxième tube (15), le flux d'air extérieur (4) circulant autour dudit deuxième tube (15).

6. Condenseur ou refroidisseur de gaz (3) selon l'une quelconque des revendications 2 à 5, **caractérisé en ce qu'**une surface frontale S2 de la deuxième zone (14) est comprise entre 0,1 et 0,5 fois une surface frontale S1 de la première zone (13).

7. Boucle de climatisation (1) d'un véhicule automobile, **caractérisée en ce qu'**elle comporte un condenseur ou refroidisseur de gaz (3) selon l'une quelconque des revendications précédentes.

8. Ensemble de refroidissement (22) comprenant un condenseur ou refroidisseur de gaz (3) selon l'une quelconque des revendications 1 à 6 et des moyens d'obturation (19, 19') d'un passage du flux d'air extérieur (4) à travers ledit condenseur ou refroidisseur de gaz (3).

9. Ensemble de refroidissement (22) selon la revendication 8, **caractérisée en ce que** lesdits moyens d'obturation (19, 19') sont constitués d'au moins un premier volet (19) affecté à la première zone (13) et un deuxième volet (19') affecté à la deuxième zone (14).

10. Procédé de mise en oeuvre d'au moins deux volets (19,19') constitutifs de l'ensemble de refroidissement (22) selon la revendication 9, **caractérisé en ce que** ledit procédé comprend :
- une première étape consistant à mesurer une température d'entrée Te du flux d'air extérieur (4) prise en amont dudit condenseur ou refroidisseur de gaz (3) et à la comparer avec une température seuil Tf du matériau à changement de phase 10, puis
- une deuxième étape qui consiste à :
*) disposer lesdits volets (19,19') en une position de fermeture dans laquelle ces derniers interdisent un passage du flux d'air extérieur (4) à travers ledit condenseur ou refroidisseur de gaz (3) si la température d'entrée Te mesurée du flux d'air extérieur (4) est supérieure à la température seuil Tf, ou
*) disposer lesdits volets (19,19') en une position d'ouverture dans laquelle ces derniers autorisent le passage du flux d'air extérieur (4) à travers ledit condenseur ou refroidisseur de gaz (3), si la température d'entrée Te mesurée du flux d'air extérieur (4) est inférieure ou égale à la température seuil Tf.

## Patentansprüche

1. Gaskondensator oder -kühler (3), der dazu bestimmt ist, ein Kühlfluid zu kühlen, das im Inneren des Gaskondensators oder -kühlers (3) zirkuliert, **dadurch gekennzeichnet, dass** der Gaskondensator oder -kühler (3) mindestens ein Phasenwechselmaterial (10) aufweist, das das Kühlfluid kühlen kann, wenn eine Temperatur T des Kühlfluids im Inneren des Gaskondensators oder -kühlers (3) höher als eine Schwellentemperatur Tf des Materials (10) ist.

2. Gaskondensator oder -kühler (3) nach dem vorhergehenden Anspruch, **dadurch gekennzeichnet, dass** der Gaskondensator oder -kühler (3) eine erste Zone (13) in Verbindung mit einem Eingang (11) von Kühlfluid ins Innere des Gaskondensators oder -kühlers (3) und eine zweite Zone (14) in Verbindung mit einem Ausgang (12) von Kühlfluid aus dem Gaskondensator oder -kühler (3) aufweist, wobei die zweite Zone (14) mit dem Phasenwechselmaterial (10) versehen ist.

3. Gaskondensator oder -kühler (3) nach Anspruch 2, **dadurch gekennzeichnet, dass** die erste Zone (13) eine erste Wärmetauscherzone zwischen einem den Gaskondensator oder -kühler (3) durchquerenden Außenluftstrom (4) und dem Kühlfluid bildet.

4. Gaskondensator oder -kühler (3) nach einem der Ansprüche 2 und 3, **dadurch gekennzeichnet, dass** die zweite Zone (14) eine zweite Wärmetauscherzone zwischen einerseits dem Kühlfluid und dem Phasenwechselmaterial (10) und andererseits diesem letzteren (10) und dem Außenluftstrom (4) bildet.

5. Gaskondensator oder -kühler (3) nach einem der Ansprüche 2 bis 4, **dadurch gekennzeichnet, dass** die zweite Zone (14) mindestens ein erstes Rohr (30) enthält, in dessen Innerem das Kühlfluid zirkuliert, wobei das Phasenwechselmaterial (10) in einem Volumen (16) gehalten wird, das vom ersten Rohr (30) und von einem zweiten Rohr (15) begrenzt wird, wobei der Außenluftstrom (4) um das zweite Rohr (15) herum zirkuliert.

6. Gaskondensator oder -kühler (3) nach einem der Ansprüche 2 bis 5, **dadurch gekennzeichnet, dass** eine Stirnfläche S2 der zweiten Zone (14) zwischen dem 0,1- und dem 0,5-Fachen einer Stirnfläche S1 der ersten Zone (13) liegt.

7. Klimatisierungskreislauf (1) eines Kraftfahrzeugs, **dadurch gekennzeichnet, dass** er einen Gaskondensator oder -kühler (3) nach einem der vorhergehenden Ansprüche aufweist.

8. Kühleinheit (22), die einen Gaskondensator oder -kühler (3) nach einem der Ansprüche 1 bis 6 und Verschlusseinrichtungen (19, 19') eines Durchgangs des Außenluftstroms (4) durch den Gaskondensator oder -kühler (3) enthält.

9. Kühleinheit (22) nach Anspruch 8, **dadurch gekennzeichnet, dass** die Verschlusseinrichtungen (19, 19') aus mindestens einer ersten Klappe (19), die der ersten Zone (13) zugeordnet ist, und einer zweiten Klappe (19') bestehen, die der zweiten Zone (14) zugeordnet ist.

10. Verfahren zur Verwendung von mindestens zwei Klappen (19, 19'), die Bestandteil der Kühleinheit (22) nach Anspruch 9 sind, **dadurch gekennzeichnet, dass** das Verfahren enthält:
- einen ersten Schritt, der darin besteht, eine Eingangstemperatur Te des Außenluftstroms (4) zu messen, die stromaufwärts vor dem Gaskondensator oder -kühler (3) abgenommen wird, und sie mit einer Schwellentemperatur Tf des Phasenwechselmaterials 10 zu vergleichen, dann
- einen zweiten Schritt, der darin besteht:
*) die Klappen (19, 19') in einer Schließstellung anzuordnen, in der diese letzteren einen Durchgang des Außenluftstroms (4) durch den Gaskondensator oder -kühler (3) verhindern, wenn die gemessene Eingangstemperatur Te des Außenluftstroms (4) höher als die Schwellentemperatur Tf ist, oder
*) die Klappen (19, 19') in einer Öffnungsstellung anzuordnen, in der diese letzteren den Durchgang des Außenluftstroms (4) durch den Gaskondensator oder -kühler (3) erlauben, wenn die gemessene Eingangstemperatur Te des Außenluftstroms (4) niedriger als die oder gleich der Schwellentemperatur Tf ist.

## Claims

1. Gas condenser or cooler (3) intended to cool a refrigerant circulating inside the said gas condenser or cooler (3), **characterized in that** the said gas condenser or cooler (3) comprises at least one phase-change material (10) able to cool the refrigerant when a temperature T of the refrigerant inside the gas condenser or cooler (3) is above a threshold temperature Tf of the said material (10).

2. Gas condenser or cooler (3) according to the preceding claim, **characterized in that** the said gas condenser or cooler (3) comprises a first zone (13) in communication with a refrigerant inlet (11) inside the said gas condenser or cooler (3) and a second zone (14) in communication with a refrigerant outlet (12) outside the said gas condenser or cooler (3), the said second zone (14) being equipped with the phase-change material (10) .

3. Gas condenser or cooler (3) according to Claim 2, **characterized in that** the said first zone (13) constitutes a first heat exchange zone for exchange of heat between an external air flow (4) passing through the said gas condenser or cooler (3) and the refrigerant.

4. Gas condenser or cooler (3) according to either one of Claims 2 and 3, **characterized in that** the said second zone (14) constitutes a second heat exchange zone for exchange of heat between, on the one hand, the refrigerant and the phase-change material (10) and, on the other hand, between the latter (10) and the external air flow (4).

5. Gas condenser or cooler (3) according to any one of Claims 2 to 4, **characterized in that** the said second zone (14) comprises at least a first tube (30) inside which the refrigerant circulates, the phase-change material (10) being kept in a volume (16) delimited by the first tube (30) and a second tube (15), the external air flow (4) circulating around the said second tube (15).

6. Gas condenser or cooler (3) according to any one of Claims 2 to 5, **characterized in that** a frontal surface area S2 of the second zone (14) is comprised between 0.1 and 0.5 times a frontal surface area S1 of the first zone (13).

7. Air-conditioning loop (1) of a motor vehicle, **characterized in that** it comprises a gas condenser or cooler (3) according to any one of the preceding claims.

8. Cooler assembly (22) comprising a gas condenser or cooler (3) according to any one of Claims 1 to 6 and shutoff means (19, 19') for closing off a passage for the flow of external air (4) through the said gas condenser or cooler (3).

9. Cooler assembly (22) according to Claim 8, **characterized in that** the said shutoff means (19, 19') are made up of at least a first flap (19) assigned to the first zone (13) and a second flap (19') assigned to the second zone (14).

10. Method of operating at least two flaps (19, 19') that make up the cooling assembly (22) according to Claim 9, **characterized in that** the said method comprises:
- a first step consisting in measuring an inlet temperature Te of the external air flow (4) measured upstream of the said gas condenser or cooler (3) and of comparing it with a threshold temperature Tf of the phase-change material 10, then
- a second step consisting in:
*) positioning the said flaps (19, 19') in a closed position in which they prevent a passage of the external air flow (4) through the said gas condenser or cooler (3) if the measured inlet temperature Te of the external air flow (4) is above the threshold temperature Tf, or
*) arranging the said flaps (19, 19') in an open position in which they allow the passage of the external air flow (4) through the said gas condenser or cooler (3) if the measured inlet temperature Te of the external air flow (4) is below or equal to the threshold temperature Tf.
